# EUROPEAN PATENT SPECIFICATION

(11) **EP 4 615 288 B1**
(45) Date of publication and mention of the grant of the patent: **26.08.2026**
(21) Application number: 23806056.0
(22) Date of filing: 08.11.2023
(51) Int. Cl.: A47J 37/06

(54) **INNER POT ASSEMBLY AND AIR FRYER**
INNENTOPFANORDNUNG UND LUFTFRITEUSE
ENSEMBLE CASSEROLE INTERNE ET FRITEUSE À AIR CHAUD

(30) Priority: 10.11.2022 CN 202223013555 U
(43) Date of publication of application: 17.09.2025
(73) Proprietor: Zhejiang Shaoxing Supor Domestic Electrical Appliance Co., Ltd., Shaoxing, Zhejiang 312000 (CN)
(72) Inventor: HU, Sizhou, Shaoxing, Zhejiang 312000 (CN); LU, Yongzhu, Shaoxing, Zhejiang 312000 (CN)
(74) Representative: LLR
(86) International application number: PCT/IB2023/061250
(87) International publication number: WO 2024/100563

(56) References cited:
- WO-A1-2022/011809
- CN-A- 108 143 306
- CN-U- 210 138 081
- CN-U- 212 996 094

## Description

### Field

The present invention belongs to the technical field of cooking utensils, in particular to an inner pot assembly and an air fryer with the inner pot assembly.

### Background

Air fryer is an electrical appliance that uses high-temperature air to fry and roast food ingredients. Existing air fryers, such as that disclosed in the document CN212996094U, usually have a visual door structure to make it possible to observe the cooking state of the ingredients, and some visual door structures are provided on the drawer type pot body.

The position where the visual door structure is located is inconvenient to clean due to the large number of components.

In addition, currently, there are usually protruding steps at the visual door of the inner pot body to support the visual window, which leads to complex manufacturing processes and high manufacturing costs for the inner pot body.

### Summary

The main purpose of the present invention is to provide an inner pot assembly to reduce the manufacturing cost of the inner pot assembly.

To this end, the present invention provides an inner pot assembly for an air fryer as described in claim 1.

In the present invention, by providing an embedding part at the through-hole in the side wall of the inner pot body, the see-through member is enabled to be connected to the embedding part, facilitating the connection of the see-through member. Compared to the existing solution of the prior art in which a flange protruding towards the outer side of the inner pot body is provided on the inner pot body to support the see-through member, the inner pot assembly of the present invention has a simpler manufacturing process, thereby reducing the manufacturing cost of the pot body structure. Furthermore, since the pot body structure is detachably connected to the handle structure, the handle structure can be removed when cleaning the pot body structure, facilitating the cleaning of the pot body structure. Further, due to the detachable connection between the pot body structure and the handle structure, the see-through member is stably connected to the inner pot body, avoiding damage caused by the movable connection of the see-through member. Still further, by inserting the positioning column into the positioning hole, the accidental detachment of the pot body structure from the handle structure is avoided, thereby improving the reliability of connection between the pot body structure and the handle structure.

Optionally, the embedding part has an embedding plane that fits with the see-through member. Since the embedding part is provided with an embedding plane that matches with the see-through member, the installation of the see-through member is facilitated and the difficulty in assembling the inner pot body is reduced.

According to an exemplary embodiment of the present invention, the pot body structure further includes a sealing element which extends continuously in a circumferential direction of the see-through member and is pressed between the embedding part and the see-through member.

Specifically, the pot body bracket is provided with a supporting rib protruding towards the inner pot body and extending in a circumferential direction of the inner pot body, the step is supported on the supporting rib, and the positioning hole is provided in the supporting rib.

Further, the inner pot assembly includes a hook assembly comprising a hook and a hook groove matching with the hook, one of the hook and the hook groove being provided on the pot body bracket, and the other being provided on the side wall of the inner pot body facing the pot body bracket. By providing the hook assembly, the reliability of connection between the pot body structure and the handle structure is further improved.

According to another exemplary embodiment of the present invention, the inner pot assembly further includes a position-limiting pin which is movably arranged on the pot body bracket. When the hook is matched with the hook groove, an extended end of the position-limiting pin abuts against a top edge of the inner pot body. In this way, the inner pot body can be firmly connected to the pot body bracket through the cooperation of the position-limiting pin and the hook assembly.

Specifically, the pot body bracket is provided with a accommodating chamber for accommodating the position-limiting pin, and a hidden end of the position-limiting pin is arranged in the accommodating chamber. The inner pot assembly further includes a reset member which is sleeved on a peripheral side of the position-limiting pin to be able to push the position-limiting pin towards the inner pot body.

Another aspect of the present invention provides an air fryer comprising an inner pot assembly as described above.

### Description of the Drawings

The above and/or other purposes and advantages of the present invention will become clearer through the description of embodiments in conjunction with the accompanying drawings, among which:
Figure 1 is a structural diagram of the inner pot assembly provided in an exemplary embodiment of the present invention.
Figure 2 is an exploded view of the inner pot assembly in Figure 1.
Figure 3 is the structural diagram of the pot body structure in Figure 2.
Figure 4 is an exploded view of the pot body structure in Figure 3.
Figure 5 is a structural diagram of the inner pot body in Figure 4 from another perspective.

### List of reference numerals:

10. Handle structure; 11. Pot body bracket;
12. Handle; 13. Outer panel;
14. Visual window; 15. Position-limiting pin;
18. Hook groove; 19. Supporting rib;
20. Pot body structure; 21. Inner pot body;
22. Basket; 23. Hook;
24. See-through member; 25. See-through member support;
26. Fasteners; 27. Sealing element;
28. Through-hole in the side wall; 29. Embedding part.

### Detailed Description of the Embodiments

We will now refer to the accompanying drawings to describe the exemplary embodiments more comprehensively. However, it should not be understood that the modes of realization of the present invention are limited to the embodiments described herein. The same reference numerals in the drawings represent the same or similar structures, therefore their detailed descriptions will be omitted.

The present invention provides an air fryer, which can include a body and an inner pot assembly. The body can have an internal cavity, and the inner pot assembly can be placed in or removed from the internal cavity. The body includes a hot air push assembly, which can blow hot air into the inner cavity of the inner pot assembly for cooking the ingredients in the inner pot assembly.

The air fryer provided in this embodiment can be a drawer type air fryer, but it is not limited thereto.

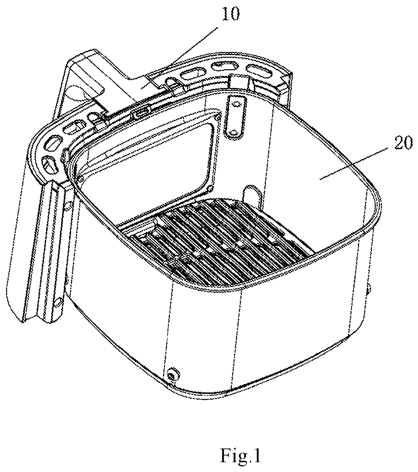

Figure 1 shows a structural diagram of an inner pot assembly provided in an exemplary embodiment of the present invention, which includes a pot body structure 20 and a handle structure 10. The handle structure 10 is detachably connected to the pot body structure 20, so that when cleaning the pot body structure 20, the handle structure 10 can be disassembled and separated from the pot body structure 20, thereby improving the cleaning convenience of the pot body structure 20.

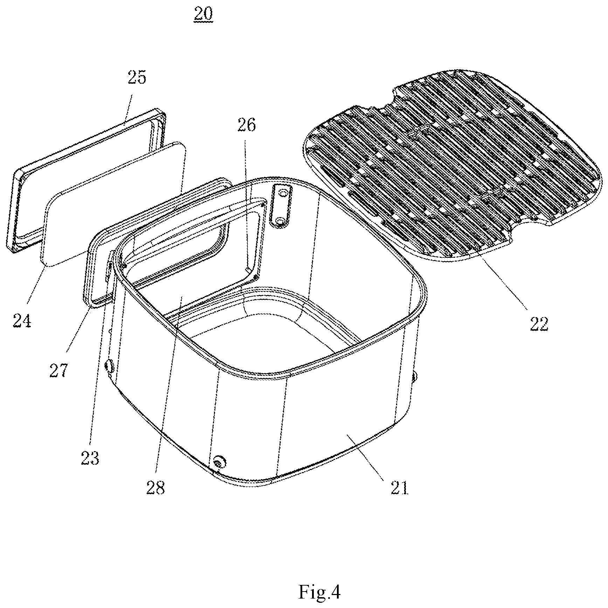

Referring to Figures 1 to 5, specifically, the pot body structure 20 includes an inner pot body 21, which is formed into a substantially cylindrical structure to facilitate the formation of a cooking chamber. According to the needs, the inner pot body 21 can be a circular cylindrical structure or a prismatic cylindrical structure. For the convenience of description, in the present invention, the inner pot body 21 of quadrangular prism cylindrical structure is described as an example. For safety in use, the corners of the prism are rounded.

The pot body structure 20 can further include a basket 22, which can be movably placed in the inner cavity of the inner pot body 21 to support the ingredients. According to needs, the basket 22 can be set in either a plate or a cylinder shape, but not limited thereto. For the convenience of description, in this embodiment, the basket 22 is set in a plate shape. The bottom wall of the basket 22 is equipped with multiple through-holes, which are used for hot air to pass through so as to facilitate the formation of a hot air channel in the inner cavity of the inner pot body 21, thereby improving the heating uniformity of the ingredients and avoiding local overheating that leads to burnt ingredients, or local underheating that leads to half-cooked ingredients.

Further, in order to facilitate the observation of the heating conditions of the ingredients during the cooking process, a see-through member 24 is provided on the side wall of the inner pot body 21. The see-through member 24 can be for example, but not limited to, a glass part. In order to adapt to the cooking temperature of the air fryer, the see-through member 24 can be made of high-temperature resistant glass.

Specifically, the side wall facing the handle structure 10 of the inner pot body 21 can be defined as a first side wall for ease of description. A through-hole 28 can be provided in the first side wall, and the see-through member 24 can be fixed at the through-hole 28 of the side wall for convenient observation of food ingredients.

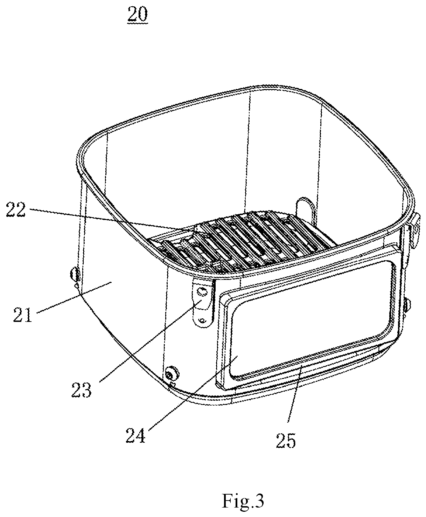

Further, referring to Figure 3, the pot body structure 20 further includes a see-through member support 25, which extends along the circumference of the see-through member 24. The see-through member support 25 is fixed to the inner pot body 21, that is, the see-through member 24 is fixed between the see-through member support 25 and the inner pot body 21, thereby improving the reliability of the connection between the see-through member 24 and the inner pot body 21. As an example, the see-through member support 25 can be connected to the inner pot body 21 through fasteners 26, or it can be connected to the inner pot body 21 through welding process. The present invention is not limited thereto.

In order to improve the utilization rate of heat, in this embodiment, the see-through member 24 is connected in a sealed way to the inner pot body 21 to avoid heat leakage.

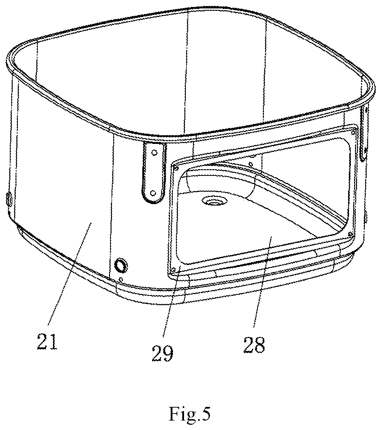

Referring to Figure 5, the inner pot body 21 includes an embedding part 29, which is recessed from the circumferential edge of the through-hole 28 in the side wall towards the inner cavity of the inner pot body 21, extends from the circumferential edge of the through-hole 28 in the side wall towards the center of the through-hole 28 in the side wall, and has an embedding plane that fits with the see-through member 24. By providing an embedding part 29 at the through-hole 28 in the side wall, an installation platform for the see-through member 24 is provided. Compared to the installation platform protruding towards the exterior of the inner pot body 21, the embedding part 29 has a simple structure and manufacturing process, thereby reducing the manufacturing cost of the inner pot body 21.

As an example, the see-through member 24 provided in the present invention is substantially quadrilateral. In order to improve the safety of use of the see-through member 24, the corners of the see-through member 24 are rounded to avoid accidental cutting of the operator.

In order to improve the service life of the see-through member 24 and avoid excessive temperature of the see-through member 24, the pot body structure 20 further includes a sealing element 27, which is arranged between the see-through member 24 and the inner pot body 21 to separate the see-through member 24 from the inner pot body 21 and avoid direct contact between the two, which may cause damage to the see-through member 24 due to excessive temperature.

Further, the sealing element 27 can be in a ring shape that matches with the embedding part 29. A first end of the sealing element 27 can be fit to the embedding part 29, and a second end can be fit to one side of the see-through member 24, the other side of which can be supported on the see-through member support 25, but the present invention is not limited thereto. As an example, the sealing member 27 can be made of silicone that is capable of resisting high temperatures and has a good heat insulation property so as to prevent heat from being conducted to the see-through member 24 via the sealing member 27.

In order to facilitate the observation of the ingredients in the cooking chamber, the see-through member support 25 can be provided with a see-through hole that is aligned with the through-hole 28 in the side wall. The edge of the see-through hole can fit onto the edge of the other side of the see-through member 24. However, the present invention is not limited thereto.

In order to improve the reliability of the connection between the pot body structure 20 and the handle structure 10, a step protruding towards the handle structure 10 is provided at the connection between the see-through member support 25 and the inner pot body 21. As shown in Figure 5, the see-through member support 25 located below the see-through member 24 is equipped with a positioning column (not shown), which extends downwards in the height direction of the inner pot body 21 from the step. The handle structure 10 is provided with a positioning hole that matches with the positioning column. In this way, by inserting the positioning column into the positioning hole, the accidental detachment of the pot body structure 20 from the handle structure 10 is avoided, thereby improving the reliability of the connection between the pot body structure 20 and the handle structure 10.

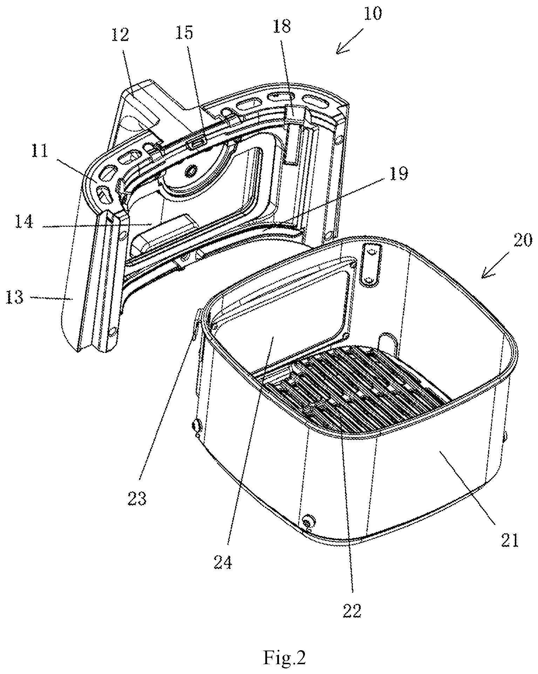

Specifically, referring to Figure 2, the pot body bracket 11 is provided with a supporting rib 19 protruding towards the inner pot body 21. The supporting rib 19 extends along the circumference of the inner pot body 21, and the step is supported on the supporting rib 19. The positioning hole is arranged in the supporting rib 19. In this way, by providing the supporting rib 19, the step can be stably supported on the supporting rib 19, that is, by providing the supporting rib 19, the lower part of the inner pot body 21 is supported, thereby further improving the reliability of the connection between the pot body structure 20 and the handle structure 10.

In this embodiment, by supporting the step on the supporting rib 19, the inner pot body 21 is supported on the supporting rib 19 so as to limit the inner pot body 21 in the height direction through the supporting rib 19. By inserting the positioning column into the positioning hole, the pot body structure 20 can be accurately positioned relative to the handle structure 10, thereby improving the efficiency of assembly of the pot body structure 20 and the handle structure 10.

In the present invention, the lower part of the inner pot body 21 is supported through the supporting rib 19, and the position-limiting pin 15 abuts against the top edge of the inner pot body 21, which allows to limit the inner pot body 21 in the height direction, avoiding accidental movement of the inner pot body 21 relative to the handle structure 10, thereby improving the reliability of use of the inner pot assembly.

As an example, the step is provided at the connection between the see-through member support 25 and the inner pot body 21, that is, the see-through member support 25 protrudes and extends towards the handle structure 10 relative to the outer peripheral wall of the inner pot body 21 to form the step, but the present invention is not limited thereto. The step can also be provided for the outer peripheral wall of the inner pot body 21 to protrude and extend outward.

In order to further improve the reliability of the connection between the pot body bracket 11 and the inner pot body 21, a positioning column (not shown) is provided on the bottom wall of the step. The positioning column extends downwards in the height direction of the inner pot body 21 from the lower part of the bottom wall, and the supporting rib 19 is equipped with a positioning hole that matches with the positioning column. When the positioning column is inserted into the positioning hole, the inner pot body 21 and the pot body bracket 11 are reliably connected. As an example, the positioning columns are provided on both sides of the see-through member 24 in the circumferential direction of the pot body bracket 11, but the present invention is not limited thereto.

In order to further improve the reliability of the connection between the pot body bracket 11 and the inner pot body 21, the inner pot assembly further includes a hook assembly, which includes a hook 23 and a hook groove 18 matching with the hook 23. One of the hooks 23 and the hook groove 18 is provided on the pot body bracket 11, and the other is provided on the side wall of the inner pot body 21 facing the pot body bracket 11. In this way, the inner pot body 21 and the pot body bracket 11 can be connected together through the hook assembly, simplifying the structure of the inner pot assembly and reducing manufacturing costs.

As an example, the hook assembly can be in two pairs, which are spaced apart along the circumference of the inner pot body 21. For example, but not limited to, the two hook assemblies are symmetrically arranged on both sides of the see-through member 24, as shown in Figure 3.

For the convenience of description, referring to Figures 2 and 3, in this embodiment it is described as an example that the hook 23 is provided on the inner pot body 21 and the hook groove 18 is provided on the pot body bracket 11.

The hook 23 is arranged on the first side wall, for example, but not limited to, the hook 23 is arranged on the upper part of the inner pot body 21 and near the top opening, but the present invention is not limited thereto. The hook groove 18 is arranged on the pot body bracket 11 and extends downwards in the height direction of the inner pot body 21 from the top edge of the pot body bracket 11, but the present invention is not limited thereto. The hook 23 is substantially parallel to the first side wall, and the opening of the hook 23 faces the bottom of the inner pot body 21, but the present invention is not limited thereto.

In order to further improve the reliability of the connection between the pot body bracket 11 and the inner pot body 21, and to avoid accidental detachment of the two, the inner pot assembly further includes a position-limiting pin 15, which is movably arranged on the pot body bracket 11. When the hook 23 is matched with the hook groove 18, the extended end of the position-limiting pin 15 abuts against the top edge of the inner pot body 21. In this way, the inner pot body 21 can be firmly connected to the pot body bracket 11 through the cooperation of the position-limiting pin 15 and the hook assembly. As an example, the position-limiting pin 15 is provided between a pair of hook assemblies, that is, a pair of hook assemblies are symmetrically provided relative to the position-limiting pin 15, but the present invention is not limited thereto,

Specifically, the position-limiting pin 15 is slidably provided perpendicularly to the side wall of the inner pot body 21 facing towards the pot body bracket 11, i.e., the position-limiting pin 15 is slidably provided on the pot body bracket 11 in a direction perpendicular to the first side wall, with the top surface of the extended end extending downwardly inclined towards the center of the inner pot body 21 to be formed as a wedge-shaped structure

As an example, the pot body bracket 11 is provided with an accommodating chamber (not shown) for accommodating the position-limiting pin 15. The hidden end of the position-limiting pin 15 is arranged in the accommodating chamber, and the inner pot assembly further includes a reset member, which is sleeved on the peripheral side of the position-limiting pin 15 to be able to push the position-limiting pin 15 to move toward the inner pot body 21. In this way, by providing the reset member, a thrust force toward the inner pot body 21 is exerted on the position-limiting pin 15 and can move the limit pin 15 toward the inner pot body 21.

In the initial state, the extended end of the position-limiting pin 15 can be located on the outer side of the pot body bracket 11. During the process of hanging the inner pot body 21 onto the pot body bracket 11, the inner pot body 21 comes close to the protruding end of the position-limiting pin 15 and pushes the position-limiting pin 15 to move away from the inner pot body 21, that is, providing thrust force to the position-limiting pin 15 to retract it into the accommodating chamber. After the hook 23 is stably connected to the hook groove 18, the top edge of the inner pot body 21 is located below the position-limiting pin 15. At this time, the above mentioned thrust force of the inner pot body 21 on the position-limiting pin 15 disappears, and the position-limiting pin 15 will return to its initial position under the action of the reset member. That is, the protruding end of the position-limiting pin 15 will extend again to the outer side of the pot body bracket 11 and be located above the top edge of the inner pot body 21. At this time, the position-limiting pin 15 will limit the inner pot body 21 in the height direction, avoiding accidental detachment of the inner pot body 21 from the pot body bracket 11.

When it is necessary to disassemble the inner pot body 21, the extended end of the position-limiting pin 15 can be manually pushed to move the position-limiting pin 15 towards the accommodating chamber 17. At this time, the inner pot body 21 can move up relative to the pot body bracket 11 until the hook detaches from the hook groove, thus achieving the separation of the inner pot body 21 and the pot body bracket 11.

When the inner pot body 21 needs to be disassembled, the extended end of the position-limiting pin 15 can be manually pushed to move the position-limiting pin 15 toward the accommodating chamber 17, at which time the inner pot body 21 can be moved upwardly with respect to the pot body bracket 11 until the hooks are disengaged from the hook grooves. The separation of the inner pot body 21 from the pot holder 11 is thus realized.

It can be understood that one end of the position-limiting pin 15 provided in the accommodating chamber can be defined as a hidden end, and the other end extending out from the pot body bracket 11 can be defined as an extended end. The extended end is opposite to the hidden end.

In this embodiment, the inner pot body 21 is limited from multiple perspectives through the cooperation of the hook assembly, the supporting rib 19 and the step, as well as the positioning column and the positioning hole, to avoid accidental detachment of the inner pot body 21 from the pot body bracket 11, thereby improving the reliability of use of the inner pot assembly.

In order to facilitate the grasping of the inner pot assembly, the handle structure 10 can comprise a handle 12 fixed on the pot body bracket 11 and arranged on the side of the pot body bracket 11 away from the inner pot body 21 for easy operation. The inner pot body 21 is detachably connected to the pot body bracket 11 to enable the handle structure 10 to be detachably connected to the inner pot body 21. Users can place the inner pot assembly in the internal cavity of the machine body by grabbing the handle 12, or remove the inner pot assembly from the internal cavity of the machine body to facilitate adding or removing ingredients to the inner pot body 21 for a cooking. After cooking, when the pot body structure 20 needs to be cleaned, the inner pot body 21 is separated from the pot body bracket 11 to facilitate cleaning of the inner pot body 21.

In order to improve the aesthetics of the inner pot assembly, the handle structure 10 further includes an outer panel 13 and a visual window 14. The outer panel 13 is arranged on the side of the pot body bracket 11 that is away from the inner pot body 21. The outer plate 13 is provided with a notch in the middle of the pot body bracket 11 in the circumferential direction, the notch being provided in alignment with the sidewall through-hole 28 to facilitate the user to observe the cooking status of the ingredients, and the visual window 14 being slidably provided at the notch. As an example, the connection between the visual window 14 and the outer plate 13 undergoes a smooth transition to further improve aesthetics.

In the description of the present invention, it should be understood that the terms "center", "up", "down", "front", "back", "left", "right", "vertical", "horizontal", "top", "bottom", "inside", "outside", and other indications of orientation or positional relationships are based on the orientation or positional relationships shown in the accompanying drawings, and are only for the convenience of describing the present invention and simplifying the description, Instead of indicating or implying that the device or element referred to must have a specific orientation, be constructed and operated in a specific orientation, and therefore cannot be understood as a limitation of the present invention.

The terms "first" and "second" are used for descriptive purposes only and are not to be understood as indicating or implying relative importance or implicitly specifying the number of technical features indicated. Thus, a feature defined with the terms "first" and "second" may expressly or impliedly include one or more such features. In the description of the present invention, unless otherwise indicated, "a plurality of/multiple" means two or more.

In the description of the present invention, it should be noted that unless otherwise specified and defined, the terms "mounted/installed", "connected", "linked", and "fixed" should be understood broadly. For example, they can refer to fixed connections, detachable connections, or integrated connections, mechanical connections, electrical connections, or communication connections; they can refer to direct connection or indirect connection realized through an intermediate medium, communication between the interior of two elements or the interaction relationship between two elements. For those skilled in the art, the specific meanings of the above terms in the present invention can be understood in specific circumstances.

The features, structures, or characteristics described in the present invention may be combined in one or more embodiments in any suitable manner. In the above description, many specific details are provided to provide a full understanding of the embodiments of the present invention. However, those skilled in the art will be aware that the disclosed technical solution can be practiced without one or more of the specific details described, or other methods, assembly, materials, etc. may be employed. In other cases, the well-known structures, materials, or operations are not shown or described in detail to avoid blurring various aspects of the present invention.

## Claims

1. An inner pot assembly for an air fryer, comprising:
- a pot body structure (20) comprising an inner pot body (21),
- a handle structure (10) comprising a pot body bracket (11) and a handle (12) fixed to the pot body bracket (11), wherein the inner pot body (21) is detachably connected to the pot body bracket (11);
- wherein a side wall of the inner pot body (21) facing the pot body bracket (11) is provided with a through-hole (28), and a see-through member (24) is fixed at the through-hole (28) and sealingly connected to the inner pot body (21);
- a circumferential edge of the through-hole (28) is recessed towards an inner cavity of the inner pot body (21) to provide an embedding part (29) which extends from the circumferential edge of the through-hole (28) towards a center of the through-hole (28), the see-through member (24) being fixed to the embedding part (29)
wherein the pot body structure (20) further comprises a see-through member support (25) which extends in a circumferential direction of the see-through member (24) and is connected to the inner pot body (21), the see-through member (24) being fixed between the see-through member support (25) and the embedding part (29),
wherein a step protruding towards the handle structure (10) is provided at a connection between the see-through member support (25) and the inner pot body (21), **characterized in that** the see-through member support (25) located below the see-through member (24) is provided with a positioning column which extends downwards in a height direction of the inner pot body (21) from the step, the handle structure (10) being provided with a positioning hole that matches with the positioning column.

2. The inner pot assembly of claim 1, wherein the embedding part (29) has an embedding plane that fits with the see-through member (24).

3. The inner pot assembly of any one of claims 1-2, wherein the pot body structure (20) further comprises a sealing element (27) which extends continuously in a circumferential direction of the see-through member (24) and is pressed between the embedding part (29) and the see-through member (24).

4. The inner pot assembly of any one of claims 1-3, wherein the pot body bracket (11) is provided with a supporting rib (19) protruding towards the inner pot body (21) and extending in a circumferential direction of the inner pot body (21), the step is supported on the supporting rib (19), and the positioning hole is provided in the supporting rib (19).

5. The inner pot assembly of any one of claims 1-4, wherein it comprises a hook assembly comprising a hook (23) and a hook groove (18) matching with the hook (23), one of the hook (23) and the hook groove (18) being provided on the pot body bracket (11), and the other being provided on the side wall of the inner pot body (21) facing the pot body bracket (11).

6. The inner pot assembly of claim 5, wherein it further comprises a position-limiting pin (15) which is movably arranged on the pot body bracket (11), when the hook (23) is matched with the hook groove (18), an extended end of the position-limiting pin (15) abuts against a top edge of the inner pot body (21).

7. The inner pot assembly of claim 6, wherein the pot body bracket (11) is provided with an accommodating chamber for accommodating the position-limiting pin (15), and a hidden end of the position-limiting pin (15) is arranged in the accommodating chamber, and in that the inner pot assembly further comprises a reset member which is sleeved on a peripheral side of the position-limiting pin (15) to be able to push the position-limiting pin (15) towards the inner pot body (21).

8. An air fryer **characterized in that** it comprises an inner pot assembly of any one of claims 1-7.

## Patentansprüche

1. Innentopfanordnung für eine Heißluftfritteuse, umfassend:
• eine Topfkörperstruktur (20), die einen Innentopfkörper (21) umfasst,
• eine Griffstruktur (10), die eine Topfkörperhalterung (11) und einen Griff (12) umfasst, der an der Topfkörperhalterung (11) befestigt ist, wobei der Innentopfkörper (21) lösbar mit der Topfkörperhalterung (11) verbunden ist;
• wobei eine Seitenwand des Innentopfkörpers (21), die der Topfkörperhalterung (11) zugewandt ist, mit einer Durchgangsöffnung (28) versehen ist und ein Durchsichtselement (24) an der Durchgangsöffnung (28) befestigt und dicht mit dem Innentopfkörper (21) verbunden ist;
• ein Umfangsrand der Durchgangsöffnung (28) ist zu einem Innenraum des Innentopfkörpers (21) hin eingezogen, um einen Einsetzabschnitt (29) bereitzustellen, der sich von dem Umfangsrand der Durchgangsöffnung (28) zu einem Zentrum der Durchgangsöffnung (28) hin erstreckt, wobei das Durchsichtselement (24) an dem Einsetzabschnitt (29) befestigt ist,
wobei die Topfkörperstruktur (20) ferner eine Durchsichtselementstütze (25) umfasst, die sich in einer Umfangsrichtung des Durchsichtselements (24) erstreckt und mit dem Innentopfkörper (21) verbunden ist, wobei das Durchsichtselement (24) zwischen der Durchsichtselementstütze (25) und dem Einsetzabschnitt (29) befestigt ist,
wobei an einer Verbindung zwischen der Durchsichtselementstütze (25) und dem Innentopfkörper (21) ein zur Griffstruktur (10) hin vorspringender Absatz vorgesehen ist, **dadurch gekennzeichnet, dass** die unterhalb des Durchsichtselements (24) angeordnete Durchsichtselementstütze (25) mit einer Positioniersäule versehen ist, die sich von dem Absatz aus in einer Höhenrichtung des Innentopfkörpers (21) nach unten erstreckt, wobei die Griffstruktur (10) mit einer zu der Positioniersäule passenden Positionieröffnung versehen ist.

2. Innentopfanordnung nach Anspruch 1, wobei der Einsetzabschnitt (29) eine Einsetzzone aufweist, die an das Durchsichtselement (24) angepasst ist.

3. Innentopfanordnung nach einem der Ansprüche 1 bis 2, wobei die Topfkörperstruktur (20) ferner ein Dichtelement (27) umfasst, das sich kontinuierlich in einer Umfangsrichtung des Durchsichtselements (24) erstreckt und zwischen dem Einsetzabschnitt (29) und dem Durchsichtselement (24) eingeklemmt ist.

4. Innentopfanordnung nach einem der Ansprüche 1 bis 3, wobei die Topfkörperhalterung (11) mit einer Stützrippe (19) versehen ist, die in Richtung auf den Innentopfkörper (21) vorspringt und sich in einer Umfangsrichtung des Innentopfkörpers (21) erstreckt, wobei der Absatz auf der Stützrippe (19) abgestützt ist und die Positionieröffnung in der Stützrippe (19) vorgesehen ist.

5. Innentopfanordnung nach einem der Ansprüche 1 bis 4, wobei sie eine Hakenanordnung umfasst, die einen Haken (23) und eine zum Haken (23) passende Hakenrille (18) umfasst, wobei einer von Haken (23) und Hakenrille (18) an der Topfkörperhalterung (11) vorgesehen ist und der andere an der der Topfkörperhalterung (11) zugewandten Seitenwand des Innentopfkörpers (21) vorgesehen ist.

6. Innentopfanordnung nach Anspruch 5, wobei sie ferner einen Anschlagstift (15) umfasst, der beweglich an der Topfkörperhalterung (11) angeordnet ist, wobei, wenn der Haken (23) mit der Hakenrille (18) im Eingriff ist, ein verlängertes Ende des Anschlagstiftes (15) gegen einen oberen Rand des Innentopfkörpers (21) anliegt.

7. Innentopfanordnung nach Anspruch 6, wobei die Topfkörperhalterung (11) mit einem Aufnahmeraum zum Aufnehmen des Anschlagstiftes (15) versehen ist und ein verdecktes Ende des Anschlagstiftes (15) in dem Aufnahmeraum angeordnet ist, und wobei die Innentopfanordnung ferner ein Rückstellelement umfasst, das an einer Umfangsseite des Anschlagstiftes (15) angeordnet ist, um den Anschlagstift (15) in Richtung auf den Innentopfkörper (21) drücken zu können.

8. Heißluftfritteuse, **dadurch gekennzeichnet, dass** sie eine Innentopfanordnung nach einem der Ansprüche 1 bis 7 umfasst.

## Revendications

1. Assemblage de cuve interne pour une friteuse à air chaud, comprenant :
• une structure de corps de cuve (20) comprenant un corps de cuve interne (21),
• une structure de poignée (10) comprenant un support de corps de cuve (11) et une poignée (12) fixée au support de corps de cuve (11), le corps de cuve interne (21) étant relié de manière détachable au support de corps de cuve (11) ;
• une paroi latérale du corps de cuve interne (21) faisant face au support de corps de cuve (11) étant pourvue d'un trou traversant (28), et un élément transparent (24) étant fixé au niveau du trou traversant (28) et raccordé de manière étanche au corps de cuve interne (21) ;
• un bord circonférentiel du trou traversant (28) étant en retrait vers une cavité interne du corps de cuve interne (21) pour former une partie d'emboîtement (29) qui s'étend depuis le bord circonférentiel du trou traversant (28) vers un centre du trou traversant (28), l'élément transparent (24) étant fixé à la partie d'emboîtement (29),
la structure de corps de cuve (20) comprenant en outre un support d'élément transparent (25) qui s'étend dans une direction circonférentielle de l'élément transparent (24) et est relié au corps de cuve interne (21), l'élément transparent (24) étant fixé entre le support d'élément transparent (25) et la partie d'emboîtement (29), la connexion entre le support d'élément transparent (25) et le corps de cuve interne (21) étant pourvue d'une marche faisant saillie vers la structure de poignée (10),
**caractérisé en ce que** le support d'élément transparent (25) situé au-dessous de l'élément transparent (24) est pourvu d'une colonne de positionnement qui s'étend vers le bas dans une direction de hauteur du corps de cuve interne (21) à partir de la marche, la structure de poignée (10) étant pourvue d'un trou de positionnement correspondant à la colonne de positionnement.

2. Assemblage de cuve interne selon la revendication 1, dans lequel la partie d'emboîtement (29) présente un plan d'emboîtement adapté à l'élément transparent (24).

3. Assemblage de cuve interne selon l'une quelconque des revendications 1 à 2, dans lequel la structure de corps de cuve (20) comprend en outre un élément d'étanchéité (27) qui s'étend de manière continue dans une direction circonférentielle de l'élément transparent (24) et est comprimé entre la partie d'emboîtement (29) et l'élément transparent (24).

4. Assemblage de cuve interne selon l'une quelconque des revendications 1 à 3, dans lequel le support de corps de cuve (11) est pourvu d'une nervure de support (19) faisant saillie vers le corps de cuve interne (21) et s'étendant dans une direction circonférentielle du corps de cuve interne (21), la marche étant supportée sur la nervure de support (19), et le trou de positionnement étant prévu dans la nervure de support (19).

5. Assemblage de cuve interne selon l'une quelconque des revendications 1 à 4, dans lequel il comprend un ensemble crochet comprenant un crochet (23) et une rainure de crochet (18) correspondant au crochet (23), l'un du crochet (23) et de la rainure de crochet (18) étant prévu sur le support de corps de cuve (11) et l'autre étant prévu sur la paroi latérale du corps de cuve interne (21) faisant face au support de corps de cuve (11).

6. Assemblage de cuve interne selon la revendication 5, dans lequel il comprend en outre une goupille de limitation de position (15) qui est disposée de manière mobile sur le support de corps de cuve (11), lorsque le crochet (23) est engagé avec la rainure de crochet (18), une extrémité prolongée de la goupille de limitation de position (15) venant en butée contre un bord supérieur du corps de cuve interne (21).

7. Assemblage de cuve interne selon la revendication 6, dans lequel le support de corps de cuve (11) est pourvu d'une chambre de réception destinée à loger la goupille de limitation de position (15), et une extrémité cachée de la goupille de limitation de position (15) est disposée dans la chambre de réception, et l'assemblage de cuve interne comprenant en outre un élément de rappel qui est monté manchonné sur un côté périphérique de la goupille de limitation de position (15) de manière à pouvoir pousser la goupille de limitation de position (15) vers le corps de cuve interne (21).

8. Friteuse à air chaud **caractérisée en ce qu'**elle comprend un Assemblage de cuve interne selon l'une quelconque des revendications 1 à 7.
